# EUROPÄISCHE PATENTANMELDUNG

(11) **EP 2 720 033 A1**
(43) Veröffentlichungstag der Anmeldung: **16.04.2014**
(21) Anmeldenummer: 12187871.4
(22) Anmeldetag: 10.10.2012
(51) Int. Cl.: G01N 25/72, G01F 15/00, G01M 99/00

(54) **Vorrichtung und Verfahren zum kombinierten Durchfluss- und Thermographiemessung**

(71) Anmelder: Siemens Aktiengesellschaft, 80333 München (DE)
(72) Erfinder: Jahnke, Ronny, Dr., 14612 Falkensee (DE); Sczepurek, Tristan, 13129 Berlin (DE)

(57) **Zusammenfassung**

Durch die kombinierte Durchfluss- und Thermographiemessung eines Bauteils kann das Bauteil zu einhundert Prozent in einer Vorrichtung bezüglich seines Kühlluftverbrauchs und der gewünschten Querschnitte von Kühlluftöffnungen überprüft werden.

## Beschreibung

Die Erfindung betrifft eine Vorrichtung, bei der eine Durchflussmessung von hohlen Bauteilen mit Austrittsöffnungen und ebenfalls eine Thermographiemessung durchgeführt werden kann.

Innengekühlte Bauteile wie Turbinenschaufeln mit Kühlluftöffnungen erfordern eine Überprüfung unterschiedlicher Parameter, um ein Versagen während des Betriebes sicher auszuschließen und um garantierte Leistungsparameter zu erreichen. Eine wichtige Größe ist der Kühlluftmengenverbrauch, der mittels Durchflussmessung ermittelt werden kann. Zu große Werte verringern den Wirkungsgrad, während zu kleine Werte eine Zerstörung der Bauteile durch Überhitzung im Betrieb verursachen könnten. Daher wird für jedes Bauteil eine Durchflussmessung (Air Flow Measurement) durchgeführt, normalerweise mit Umgebungsluft (Luftmengenmessung).

Eine weitere Qualitätssicherung stellt die Thermographiemessung dar, bei der heiße Luft aus dem Bauteil aus Löchern ausströmt und die Geometrie der Löcher mittels einer Thermographiemessung erfasst wird.

Es ist daher Aufgabe der Erfindung eine Vorrichtung aufzuzeigen, in der ein hohles Bauteil in einer Vorrichtung vollständig bezüglich seiner Öffnungen überprüft werden kann.

Die Aufgabe wird gelöst durch eine Vorrichtung gemäß Anspruch 1 und ein Verfahren gemäß Anspruch 4.

In den Unteransprüchen sind weitere vorteilhafte Maßnahmen aufgelistet, die beliebig miteinander kombiniert werden können, um weitere Vorteile zu erzielen.

Es zeigen:
- Figur 1: eine erfindungsgemäße Vorrichtung und
- Figur 2: Turbinenschaufel

Die Beschreibung und die Figuren stellen nur Ausführungsbeispiele der Erfindung dar.

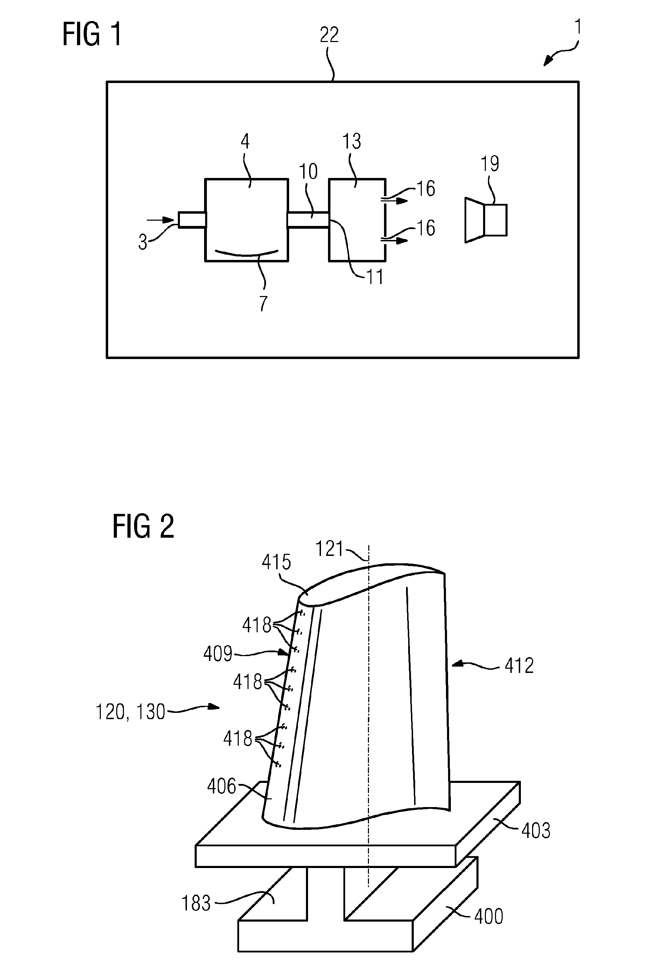

In Figur 1 ist eine erfindungsgemäße Vorrichtung 1 gezeigt. Die Vorrichtung 1 weist vorzugsweise eine äußere Umhäusung 22 auf.

Innerhalb der vorzugsweise vorhandenen Umhäusung 22 ist das zu vermessende Bauteil 13, 120, 130 vorhanden, das zumindest eine Einlassöffnung 11 aufweist, z.B. bei der Turbinenschaufel 120, 130 eine Öffnung im Schaufelfuß 183, 400 (Fig. 2), bei der das Kühlmittel eintritt und Austrittsöffnungen 16, sogenannte Kühlluftöffnungen im Schaufelblattbereich, Abströmkante 412 (Fig. 2) bei einer Turbinenschaufel 120, 130 (Fig. 2).

Ein Gas, insbesondere Luft strömt zwecks Durchflussmessung (Luftmengenmessung) durch eine Öffnung 3 in eine Beruhigungskammer 4 hinein, die eine gleichmäßige Strömungsverteilung ergibt, wobei eine strömungstechnische Verbindung 10 zwischen der Beruhigungskammer 4 und dem Bauteil 13 vorhanden ist.

Die in die Beruhigungskammer 4 einströmende Gasmenge (Durchflussmenge: kg/s) wird vor der Beruhigungskammer erfasst, zum Beispiel durch Differenzdruckmessung an einer Düse oder Blende.

Der Druck in der Beruhigungskammer 4 wird während der Durchflussmessung auf einen konstanten Wert geregelt. Die ermittelte Durchflussmenge für das Bauteil 13, 120, 130 muss, gegebenenfalls nach Normierung der Umgebungsbedingungen

(Temperatur, Umgebungsdruck), in einem vorgegebenen Toleranzbereich liegen.

Das Bauteil 13 und die Beruhigungskammer ist vorzugsweise innerhalb einer Umhäusung 22 angeordnet.

Ebenso kann das Bauteil 13, 120, 130 thermographisch vermessen werden.

Dies geschieht wie folgt:
Mittels eines Heizelementes 7 innerhalb der Beruhigungskammer 4 ist es möglich, das in das Bauteil 13 einströmende Gas vorab zu erhitzen, wobei dann durch eine Kamera 19 innerhalb einer, vozugsweise vorhandenen Umhäusung ein Thermographiebild vom äußeren des Bauteils 13 aufgenommen wird, das ermitteln kann, ob die einzelnen Kühlluftbohrungen 16 geöffnet sind und den jeweiligen gewünschten Wirkungsquerschnitt aufweisen.

Nach Abschluss der thermographischen Vermessung kann die Beruhigungskammer 4 mit ungeheizter Luft gekühlt werden.

Vorzugsweise weist die Beruhigungskammer 4 im Inneren eine Wärmedämmschicht auf, um eine Erwärmung der Beruhigungskammer 4 zu vermeiden.

Ein beispielhafter Prüfablauf sieht wie folgt aus,
a. Bauteil fixieren
b. Durchflussmessung durchführen
c. Heizelement einschalten
d. Thermografiemessung mit Infrarot-Kamera 19 durchführen
e. Heizelement ausschalten
f. Beruhigungskammer 4 mit Luft kühlen
g. Bauteil 120, 130 entnehmen

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Vorrichtung (1)
zur kombinierten Durchfluss- und Thermographiemessung von hohlen Bauteilen (13, 120, 130) mit Öffnungen (11, 16), die (1) zumindest aufweist:
eine Halterung oder eine Auflage für das zu vermessende Bauteil (13, 120, 130),
eine Beruhigungskammer (4),
die zumindest ein Heizelement (7) zur Erhitzung des Gases in der Beruhigungskammer (4) aufweist,
aus der ein Gas in das hohle Bauteil (13, 120, 130) strömt sowie
eine Infrarot-Kamera (19),
die thermographische Bilder von dem Bauteil (13, 120, 130) und deren Austrittsöffnungen (16) aufnehmen kann.

2. Vorrichtung nach Anspruch 1,
bei der die Halterung, die Beruhigungskammer (4) und die Thermographiekamera (19) in einer Umhäusung (22) angeordnet sind.

3. Vorrichtung nach einem oder beiden der Ansprüche 1 oder 2,
bei der die Beruhigungskammer (4) eine Wärmedämmschicht oder eine Wärmedämmung aufweist.

4. Verfahren zur Kombinierten Durchfluss- und Thermographiemessung,
bei dem eine Vorrichtung gemäß einem oder mehreren Ansprüche 1 bis 3 verwendet wird.

5. Verfahren nach Anspruch 4,
mit folgenden Verfahrensschritten:
- Bauteil (13, 120, 130) fixieren,
- Durchflussmessung durchführen
- Heizelement in der Beruhigungskammer (4) einschalten
- Thermographiemessung mit Infrarot-Kamera (19) durchführen
- Heizelement ausschalten
- Innenraum der Beruhigungskammer (4) mit Luft kühlen
- Bauteil (13, 120, 130) entnehmen.
